# EUROPEAN PATENT SPECIFICATION

(11) **EP 3 262 246 B1**
(45) Date of publication and mention of the grant of the patent: **02.12.2020**
(21) Application number: 16716681.8
(22) Date of filing: 23.02.2016
(51) Int. Cl.: E04B 1/41, F16B 37/04, F16B 7/18

(54) **ANCHORING SYSTEM FOR BUILDING CONSTRUCTIONS**
VERANKERUNGSSYSTEM FÜR BAUWERKE
SYSTÈME D'ANCRAGE POUR STRUCTURES DE BÂTIMENT

(30) Priority: 24.02.2015 IT MI20150273
(43) Date of publication of application: 03.01.2018
(73) Proprietor: GL Locatelli S.r.l., 20131 Milano (IT)
(72) Inventor: LOCATELLI, Giuseppe, 21047 Saronno (VA) (IT)
(74) Representative: Branca, Emanuela
(86) International application number: PCT/IB2016/050964
(87) International publication number: WO 2016/135624

(56) References cited:
- EP-A2- 1 865 118
- WO-A1-2013/013375
- DE-A1- 1 683 213
- US-A1- 2014 250 825

## Description

The present invention refers to an anchoring system for building constructions, in particular an anchoring system of the type able to be pre-installed on concrete structures.

Fixing or anchoring systems able to be pre-installed on concrete structures are known. These fixing or anchoring systems typically consist of profiles or channels having a C-shape in cross section. Such anchoring profiles are usually manufactured from steel and comprise, on their own back (in other words the surface opposite the opening of the C), a plurality of integral tie rods or posts that constitute the anchoring part of the profiles themselves.

The C-shaped anchoring profile and the respective anchoring part are introduced close to the steel bars that make up the reinforcement of concrete structures before the concrete is cast. The open part of the C-shaped anchoring profile remains adhering to the formwork so that, after having made the concrete structure, the cavity of the C is accessible to carry out and complete the fixing. An anchoring system with a C-shaped profile is known, for example, from document EP 0 758 039 A1 to Halfen.

Document EP 1 865 118 A2 also discloses an anchoring system. This anchoring system comprises the subject-matter of the preamble of claim 1.

C-shaped anchoring profiles are usually manufactured through hot drawing, so as to reinforce the edges close to the opening of the C and grow the steel mass arranged adhering to the point of application of the load. Although the evolution of raw materials allows channels to be made also starting from cold formed sheets, it is still recognised that the steel masses that make up the edges of the channels produced by hot drawing or shaping are necessary for the application of dynamic loads and offer better performances and better safety for the application of shearing loads and dynamic loads.

Again according to the prior art, hot-drawn C-shaped anchoring profiles are combined with specific anchor-headed screws to allow fixing to be carried out on the worksite. The shape in section of such an anchor head must correspond to the shape in section of the C-shaped channel.

The components that allow the connection and the fixing together between the C-shaped channel and the anchor-headed screws should always be provided by the producer of the channel. Sometimes, such components are, however, managed by different subjects. Therefore, it is the responsibility of the user to always purchase the bolts and the channel on which such bolts must be applied from the same producer. The use of bolts different from those supplied and prescribed by the producer of the channel may indeed compromise the performances of the anchoring, due to the low design tolerances that these components must necessarily have.

Another known anchoring system with C-shaped profile is described in document US 2014/0250825 A1. Document US 2014/0250825 A1 describes an anchoring profile consisting of a double channel, in other words an actual anchoring channel, in which a plurality of connectors is inserted, plus a second channel configured to house a reinforcing plate of the anchoring profile. The two channels are formed on opposite sides of the anchoring profile and have a total height clearly greater than the width of the anchoring profile.

The great bulk of such an anchoring profile inside the concrete structure implies a repositioning of the steel bars that form the reinforcement of the structure itself. This imposes design modifications and complex worksite operations.

The aim of the present invention is therefore to make an anchoring system for building constructions, in particular an anchoring system of the type able to be pre-installed on concrete structures, which is able to solve the aforementioned drawbacks of the prior art in an extremely simple, cost-effective and particularly functional manner.

In detail, a purpose of the present invention is to make an anchoring system for building constructions configured to withstand both dynamic loads and shearing loads that are particularly high. Loads of this type develop, for example, during the mounting of large glass and aluminium facades, also called "curtain walls", and of lifts and installations.

Another aim of the present invention is to make an anchoring system for building constructions that does not require the use of specific additional components for carrying out the fixing operations.

A further aim of the present invention is to make an anchoring system for building constructions that does not require complex production technologies that use a lot of energy, in contrast with the increasing requirements to save energy in order to protect the environment.

Yet another aim of the present invention is to make an anchoring system for building constructions that occupies the least possible space inside the concrete, whilst still maintaining excellent anchoring performances.

These aims according to the present invention are accomplished by making an anchoring system for building constructions, in particular an anchoring system of the type able to be pre-installed on concrete structures, as outlined in claim 1.

Further features of the invention are highlighted by the dependent claims, which are an integral part of the present description.

The features and advantages of an anchoring system for building constructions according to the present invention will become clearer from the following description, given as an example and not for limiting purposes, referring to the attached schematic drawings, in which:
figure 1 is a perspective view of the main components of a preferred embodiment of the anchoring system for building constructions according to the present invention;
figure 2 is a cross section view of the components of figure 1;
figure 3 is a cross section view of a C-shaped anchoring profile belonging to the anchoring system for building constructions according to the present invention;
figure 4 is a first perspective view of the C-shaped anchoring profile of figure 3;
figure 5 is a second perspective view of the C-shaped anchoring profile of figure 3; and
figures 6 to 8 show three embodiments of three respective connector elements able to be operatively connected to the C-shaped anchoring profile of figure 3.

With reference to the figures, an anchoring system for building constructions according to the present invention is shown. The system comprises at least one anchoring profile 10 having a C-shape in cross section. The anchoring profile 10 defines an inner channel 12 and is provided with an outer back 14.

A plurality of anchoring nails 16 configured to be fixed onto a first structural component, typically a concrete structure extends from the outer surface of the outer back 14. Each anchoring nail 16 is provided with an anchoring end 18, a cylindrical shank 20 with constant section, preferably circular, and a connection portion 22 with the outer back 14 of the anchoring profile 10.

The anchoring system thus comprises a plurality of connectors 24 configured to be inserted into the inner channel 12 of the anchoring profile 10. Each connector 24 is provided with at least one first connection means 26 with a respective attachment assembly 28 configured to be fixed on a second structural component, typically a steel structure. The attachment assembly 28 in turn comprises at least one second connection means 30 able to be coupled with the first connection means 26 of each connector 24, as well as at least one adjustment element 32 configured to adjust the mutual positioning between such an attachment assembly 28 and the anchoring profile 10.

Each connector 24 has a cross section shape and size compliant to the inner shape of the inner channel 12 of the anchoring profile 10. Each connector 24 also has a length L, measured in the longitudinal direction of the anchoring profile 10, which is greater than the width W1, measured in the transverse direction of the anchoring profile 10, of the connector 24 itself and, in general, than the average width of a conventional anchor-headed screw.

In detail, the open upper edge of the anchoring profile 10 is provided with a pair of opposite surfaces 34 and 36 inclined towards the outer back 14. Each connector 24 is thus provided with a pair of inclined surfaces 38 and 40 engageable in shape coupling with the respective inclined surfaces 34 and 36 of the open upper edge of the anchoring profile 10. The contact between the two inclined surfaces 38 and 40 of the connector 24 and the two corresponding inclined surfaces 34 and 36 of the open upper edge of the anchoring profile 10 allow a stable transfer of the loads from the connector 24 to the inner channel 12, passing from such an open upper edge up to the outer back 14, and from such an outer back 14 to the anchoring nails 16 that allow the definitive transfer of the loads to the concrete. Each connector 24 is also provided, at the respective inclined surfaces 38 and 40, with a pair of corners 42 and 44 having a rounded shape arranged in order to not generate notches on the inner channel 12 in the assembled configuration of the anchoring system.

The inner channel 12 has a total height H, measured between the outer back 14 and the open upper edge, which is smaller than the width W2, measured in the transverse direction of the anchoring profile 10, of the inner channel 12 itself. This characteristic allows the anchoring profile 10 to occupy less space inside the concrete, thanks to the low depth of the inner channel 12. A greater penetration of the anchoring profile 10 in the concrete increases the performance of the anchoring and, therefore, the load that can be applied to the fixation, but restricts the positioning of the reinforcement cages, forcing possible modifications of the design and complex worksite operations.

The mechanical actions that affect the anchoring system allow less exacting stress of the components of the system itself, contributing to better performance with less local stresses. In this way, the use of calculation coefficients in use in the regulatory design standards gives the anchoring system higher safety levels, an aspect that is anything but negligible in light of the possible applications in the field of anchoring for building constructions.

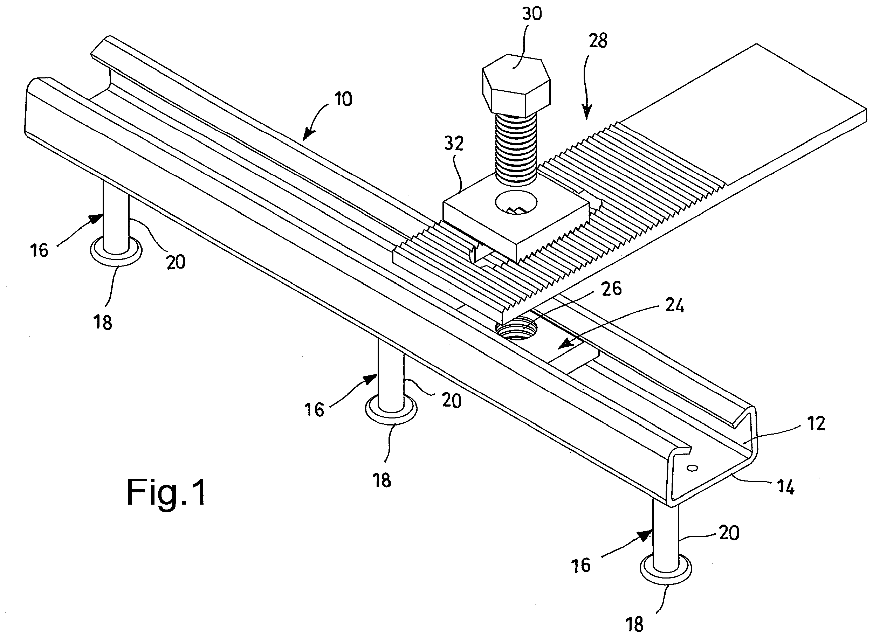

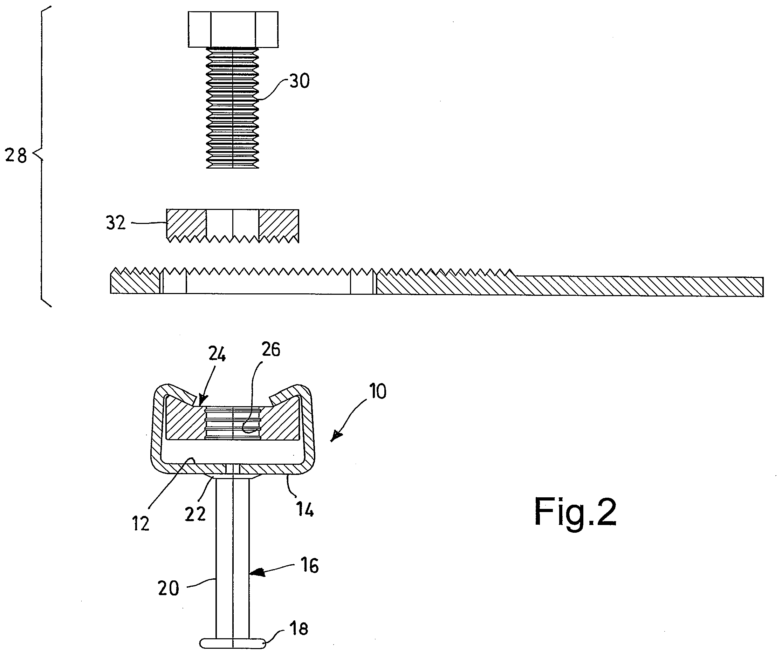

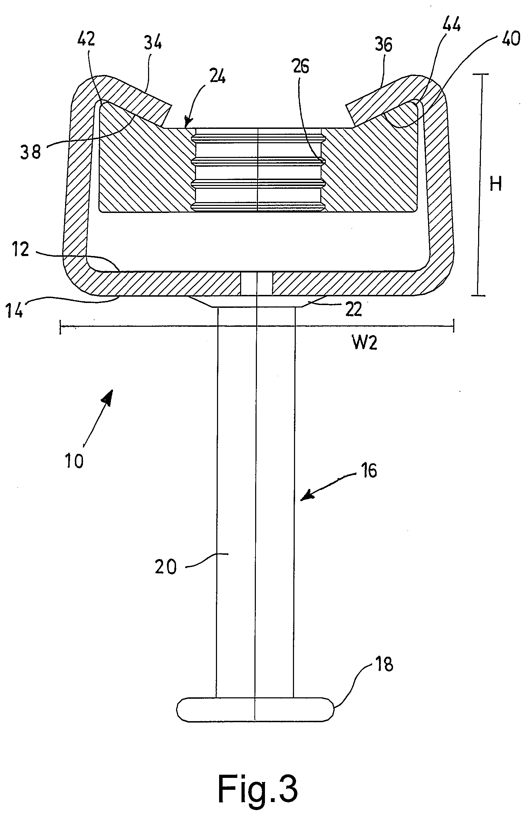

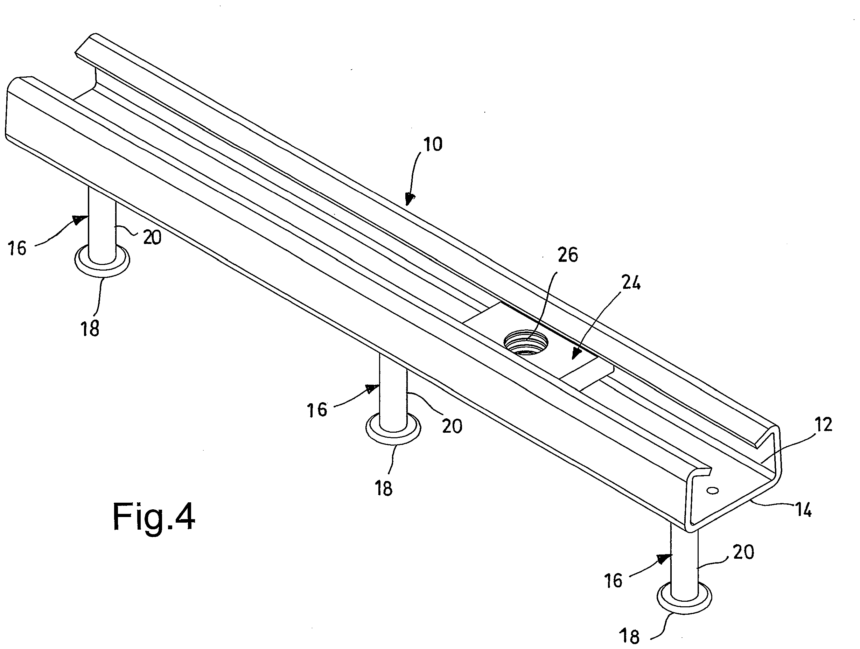

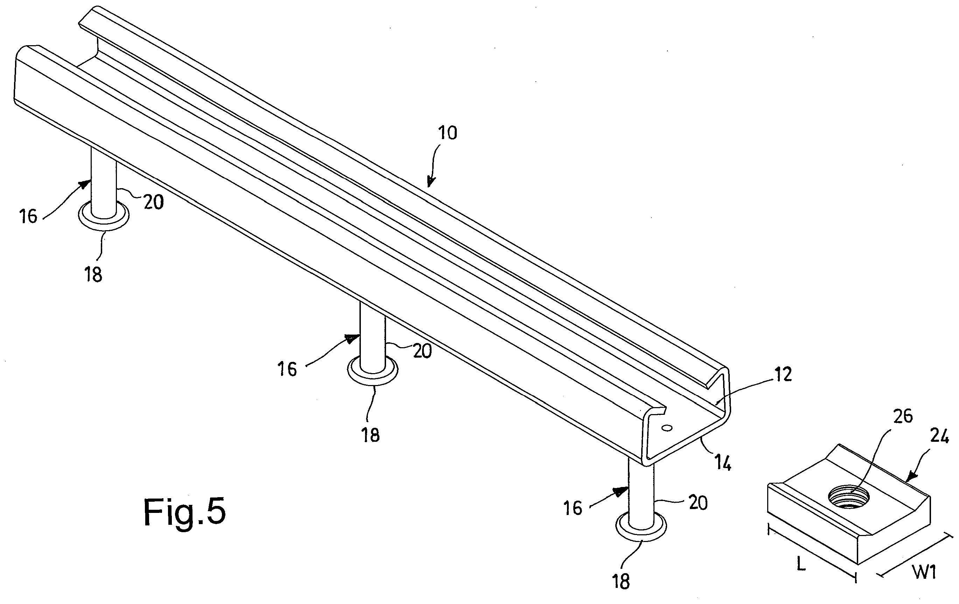

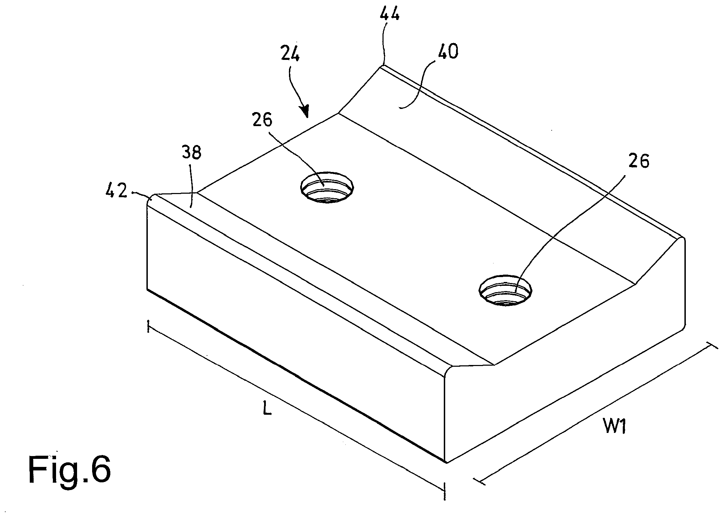

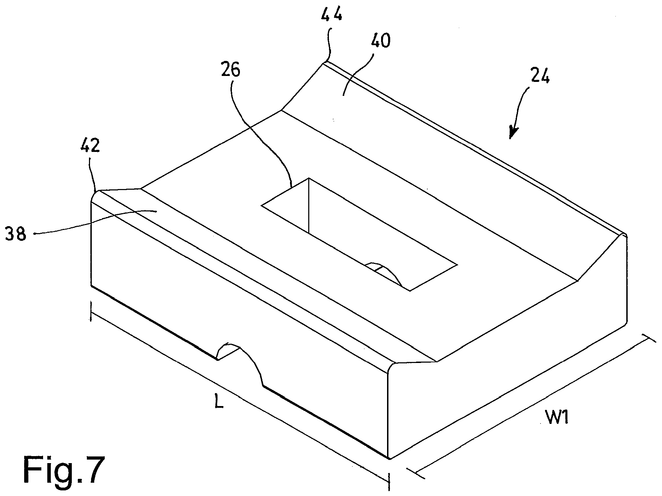

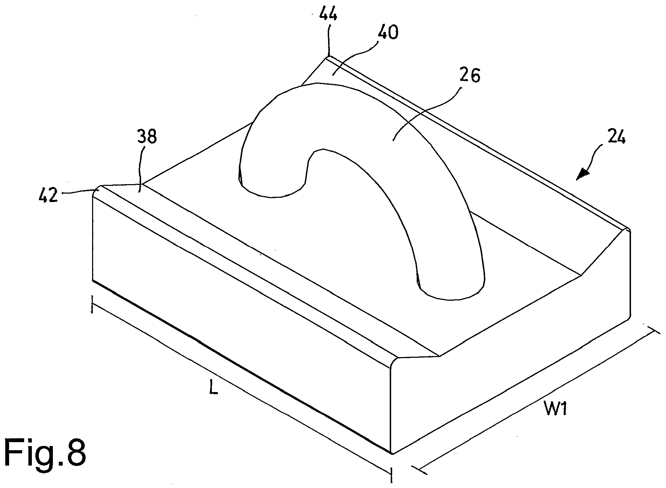

The first connection means 26 of each connector 24 can consist of one (figure 1-5) or more (figure 6) threaded holes in order to allow the subsequent coupling with a respective second connection means 30 of the attachment assembly 28 in turn consisting of one or more standard bolts. The first connection means 26 of each connector 24 could, however, also consist of one or more slits and/or cavities (figure 7), as well as one or more hooks and/or projections (figure 8) adapted for allowing multiple ways of fixing.

Each connector 24 can be already inserted in the inner channel 12 of the respective anchoring profile 10 before the installation of the anchoring system, or it can be inserted after the concrete casting step, provided that the anchoring profiles 10 are arranged with a suitable box for post-insertion. Each connector 24 and the anchoring profile 10 can be manufactured with different materials as a function both of the mechanical stresses that they must withstand, and the resistance to chemical actions.

Each connector 24 can slide in the inner channel 12 of the respective anchoring profile 10. During fixing at the worksite, the connector 24 can change position up to the moment of locking of the bolt 30. This allows the anchoring system to be adjustable. The characteristic of adjustment is not present in post-installed fixations. The connector 24 ensures the application of the load to the anchoring profile 10 at any point of its length and independently from the position of the anchoring nails 16 arranged on the outer back 14 of the anchoring profile 10 itself. Advantageously, the anchoring profile 10 is manufactured from steel through a cold lamination process.

It has thus been seen that the anchoring system for building constructions according to the present invention achieves the purposes outlined earlier. The anchoring system makes it possible to overcome the use of hot drawn C-shaped channels that, precisely due to the method of production, require highly energy intensive production technologies, in contrast with the increasing needs to save energy to protect the environment.

A further feature of the anchoring system according to the invention is that it does not require the use of special components, like for example anchor headed screws, to carry out the fixing. Since the connector is already inserted inside the channel, the worker in charge of installation on the worksite needs exclusively standard bolts, widely available throughout the world and made according to quality and performance standards covered by international standards.

The anchoring system for building constructions of the present invention thus conceived can in any case undergo numerous modifications and variants, all of which are covered by the same inventive concept; moreover, all of the details can be replaced by technically equivalent elements. In practice, the materials used, as well as the shapes and sizes, can be whatever according to the technical requirements.

The scope of protection of the invention is therefore defined by the attached claims.

## Claims

1. Anchoring system for building constructions comprising:
- at least one anchoring profile (10) having a C-shape in cross section, said anchoring profile (10) defining an inner channel (12) and being provided with an outer back (14), wherein a plurality of anchoring nails (16) configured to be fixed onto a first structural component extends from the outer surface of the outer back (14);
- a plurality of connectors (24) configured to be inserted into the inner channel (12) of the anchoring profile (10), wherein each connector (24) is provided with at least one first connection means (26) with a respective attachment assembly (28) configured to be fixed onto a second structural component, said attachment assembly (28) in turn comprising at least one second connection means (30) able to couple with the first connection means (26) of each connector (24),
wherein each connector (24) has a cross section shape and size compliant to the inner shape of the inner channel (12) of the anchoring profile (10), and wherein each connector (24) has a length (L), measured in the longitudinal direction of the anchoring profile (10), which is greater than the width (W1), measured in the transverse direction of the anchoring profile (10), of said connector (24), wherein the inner channel (12) has a total height (H), measured between the outer back (14) and the open upper edge, which is smaller than the width (W2), measured in the transverse direction of the anchoring profile (10), of said inner channel (12),
**characterized in that** the anchoring profile (10) is manufactured from steel through a cold lamination process, and
**in that** the open upper edge of the anchoring profile (10) is provided with a pair of opposite surfaces (34, 36) inclined towards the outer back (14), each connector (24) being provided with a pair of inclined surfaces (38, 40) engageable in shape coupling with the respective inclined surfaces (34, 36) of the open upper edge of the anchoring profile (10), so that the contact between the two inclined surfaces (38, 40) of the connector (24) and the two corresponding inclined surfaces (34, 36) of the open upper edge of the anchoring profile (10) allow a stable transfer of loads from said connector (24) to the inner channel (12), each connector (24) being provided, at the respective inclined surfaces (38, 40), with a pair of corners (42, 44) having a rounded shape and arranged in order to not generate notches on the inner channel (12) in the assembled configuration of the anchoring system.

2. Anchoring system according to claim 1, **characterised in that** the first connection means (26) of each connector (24) consists of one or more threaded holes in order to allow the subsequent coupling with a respective second connection means (30) of the attachment assembly (28) in turn consisting of one or more bolts.

3. Anchoring system according to claim 1, **characterised in that** the first connection means (26) of each connector (24) consists of one or more slits and/or cavities.

4. Anchoring system according to claim 1, **characterised in that** the first connection means (26) of each connector (24) consists of one or more hooks and/or projections.

5. Anchoring system according to any claims 1 to 4, **characterised in that** each connector (24) is arranged in a sliding manner inside the inner channel (12) of the respective anchoring profile (10), in such a way that said connector (24) can change position up to the moment of coupling between the second connection means (30) of the attachment assembly (28) and the first connection means (26) of said connector (24).

6. Anchoring system according to any claims 1 to 5, **characterised in that** the attachment assembly (28) comprises at least one adjustment element (32) configured to adjust the mutual positioning between said attachment assembly (28) and the anchoring profile (10) .

## Patentansprüche

1. Verankerungssystem für Baukonstruktionen bestehend aus:
- mindestens ein Verankerungsprofil (10), das im Querschnitt C-förmig ist, wobei das Verankerungsprofil (10) einen inneren Kanal (12) definiert und mit einer äußeren Rückseite (14) versehen ist, wobei eine Vielzahl von Verankerungsnägeln (16), die so konfiguriert sind, dass sie an einer ersten strukturellen Komponente befestigt werden können, sich von der Außenfläche der äußeren Rückseite (14) erstrecken;
- eine Vielzahl von Verbindern (24), die so konfiguriert sind, dass sie in den inneren Kanal (12) des Verankerungsprofils (10) eingeführt werden können, wobei jeder Verbinder (24) mit mindestens einem ersten Verbindungsmittel (26) mit einer entsprechenden Befestigungsanordnung (28) versehen ist, die so konfiguriert ist, dass sie an einer zweiten strukturellen Komponente befestigt werden kann, wobei die Befestigungsanordnung (28) ihrerseits mindestens ein zweites Verbindungsmittel (30) umfasst, das mit dem ersten Verbindungsmittel (26) jedes Verbinders (24) gekoppelt werden kann,
wobei jeder Verbinder (24) eine Querschnittsform und - größe aufweist, die mit der Innenform des inneren Kanals (12) des Verankerungsprofils (10) übereinstimmt, und wobei jeder Verbinder (24) eine Länge (L), gemessen in Längsrichtung des Verankerungsprofils (10), aufweist, die größer ist als die Breite (W1) des Verbinders (24), gemessen in Querrichtung des Verankerungsprofils (10), wobei der innere Kanal (12) eine Gesamthöhe (H) aufweist, gemessen zwischen der äußeren Rückseite (14) und der offenen Oberkante, die kleiner ist als die in Querrichtung des Verankerungsprofils (10) gemessene Breite (W2) des inneren Kanals (12), **dadurch gekennzeichnet, dass** das Verankerungsprofil (10) aus Stahl durch ein Kaltlaminierungsverfahren hergestellt ist, und dass die offene Oberkante des Verankerungsprofils (10) mit einem Paar gegenüberliegender Oberflächen (34, 36) versehen ist, die zur äußeren Rückseite (14) hin geneigt sind, wobei jeder Verbinder (24) mit einem Paar geneigter Flächen (38, 40) versehen ist, die in Formkopplung mit den jeweiligen geneigten Flächen (34, 36) der offenen Oberkante des Verankerungsprofils (10) in Eingriff bringbar sind, so dass der Kontakt zwischen den beiden geneigten Flächen (38, 40) des Verbinders (24) und den beiden entsprechenden geneigten Flächen (34, 36) der offenen Oberkante des Verankerungsprofils (10) eine stabile Übertragung von Lasten von dem Verbinder (24) auf den inneren Kanal (12) ermöglichen, wobei jeder Verbinder (24) an den jeweiligen geneigten Flächen (38, 40) mit einem Paar von Ecken (42, 44) versehen ist, die eine abgerundete Form aufweisen und so angeordnet sind, dass sie in der zusammengebauten Konfiguration des Verankerungssystems keine Kerben auf dem inneren Kanal (12) erzeugen.

2. Verankerungssystem nach Anspruch 1, **dadurch gekennzeichnet, dass** das erste Verbindungsmittel (26) jedes Verbinders (24) aus einem oder mehreren Gewindelöchern besteht, um die nachfolgende Kopplung mit einem jeweiligen zweiten Verbindungsmittel (30) der Befestigungsanordnung (28) zu ermöglichen, die wiederum aus einem oder mehreren Bolzen besteht.

3. Verankerungssystem nach Anspruch 1, **dadurch gekennzeichnet, dass** das erste Verbindungsmittel (26) jedes Verbinders (24) aus einem oder mehreren Schlitzen und/oder Hohlräumen besteht.

4. Verankerungssystem nach Anspruch 1, **dadurch gekennzeichnet, dass** das erste Verbindungsmittel (26) jedes Verbinders (24) aus einem oder mehreren Haken und/oder Vorsprüngen besteht.

5. Verankerungssystem nach den Ansprüchen 1 bis 4, **dadurch gekennzeichnet, dass** jeder Verbinder (24) gleitend innerhalb des inneren Kanals (12) des jeweiligen Verankerungsprofils (10) derart angeordnet ist, dass der genannte Verbinder (24) seine Position bis zum Moment der Kopplung zwischen dem zweiten Verbindungsmittel (30) der Befestigungsanordnung (28) und dem ersten Verbindungsmittel (26) des genannten Verbinders (24) ändern kann.

6. Verankerungssystem nach allen Ansprüchen 1 bis 5, **dadurch gekennzeichnet, dass** die Befestigungsanordnung (28) mindestens ein Einstellelement (32) umfasst, das so konfiguriert ist, dass es die gegenseitige Positionierung zwischen der Befestigungsanordnung (28) und dem Verankerungsprofil (10) einstellt.

## Revendications

1. Système d'ancrage pour constructions de type bâtiments comprenant :
- au moins un profilé d'ancrage (10) présentant une section transversale en forme de C, ledit profilé d'ancrage (10) définissant un canal intérieur (12) et étant pourvu d'une partie arrière extérieure (14), une pluralité de goujons d'ancrage (16) conçus pour être fixés sur un premier élément structural s'étendant à partir de la surface extérieure de la partie arrière extérieure (14) ;
- une pluralité de pièces de raccordement (24) conçues pour être insérées dans le canal intérieur (12) du profilé d'ancrage (10), chaque pièce de raccordement (24) étant pourvue d'au moins un premier moyen de raccordement (26) associé à un ensemble de fixation (28) respectif conçu pour être fixé sur un second élément structural, ledit ensemble de fixation (28) comprenant quant à lui au moins un second moyen de raccordement (30) apte à s'accoupler avec le premier moyen de raccordement (26) de chaque pièce de raccordement (24),
chaque pièce de raccordement (24) présentant une forme et des dimensions en section transversale conformes à la forme intérieure du canal intérieur (12) du profilé d'ancrage (10), et chaque pièce de raccordement (24) présentant une longueur (L), mesurée dans la direction longitudinale du profilé d'ancrage (10), qui est supérieure à la largeur (W1), mesurée dans la direction transversale du profilé d'ancrage (10), de ladite pièce de raccordement (24), le canal intérieur (12) présentant une hauteur totale (H), mesurée entre la partie arrière extérieure (14) et le bord supérieur ouvert, qui est inférieure à la largeur (W2), mesurée dans la direction transversale du profilé d'ancrage (10), dudit canal intérieur (12), **caractérisé en ce que** le profilé d'ancrage (10) est fabriqué en acier par un procédé de laminage à froid, et **en ce que** le bord supérieur ouvert du profilé d'ancrage (10) est pourvu d'une paire de surfaces opposées (34, 36) inclinées vers la partie arrière extérieure (14), chaque pièce de raccordement (24) étant pourvue d'une paire de surfaces inclinées (38, 40) pouvant être mises en prise par accouplement géométrique avec les surfaces inclinées (34, 36) respectives du bord supérieur ouvert du profilé d'ancrage (10), de telle sorte que le contact entre les deux surfaces inclinées (38, 40) de la pièce de raccordement (24) et les deux surfaces inclinées (34, 36) correspondantes du bord supérieur ouvert du profilé d'ancrage (10) permette un transfert stable des charges de ladite pièce de raccordement (24) audit canal intérieur (12), chaque pièce de raccordement (24) étant pourvue, au niveau des surfaces inclinées (38, 40) respectives, d'une paire de coins (42, 44) présentant une forme arrondie et prévus de façon à ne pas produire d'entailles sur le canal intérieur (12) dans la configuration assemblée du système d'ancrage.

2. Système d'ancrage selon la revendication 1, **caractérisé en ce que** le premier moyen de raccordement (26) de chaque pièce de raccordement (24) est constitué d'un ou de plusieurs trous taraudés afin de permettre l'accouplement ultérieur avec un second moyen de raccordement (30) respectif de l'ensemble de fixation (28) quant à lui constitué d'un ou de plusieurs boulons.

3. Système d'ancrage selon la revendication 1, **caractérisé en ce que** le premier moyen de raccordement (26) de chaque pièce de raccordement (24) est constitué d'une ou de plusieurs fentes et/ou cavités.

4. Système d'ancrage selon la revendication 1, **caractérisé en ce que** le premier moyen de raccordement (26) de chaque pièce de raccordement (24) est constitué d'un(e) ou de plusieurs crochets et/ou saillies.

5. Système d'ancrage selon l'une quelconque des revendications 1 à 4, **caractérisé en ce que** chaque pièce de raccordement (24) est placée de manière coulissante à l'intérieur du canal intérieur (12) du profilé d'ancrage (10) respectif, de telle sorte que ladite pièce de raccordement (24) puisse changer de position jusqu'au moment de l'accouplement entre le second moyen de raccordement (30) de l'ensemble de fixation (28) et le premier moyen de raccordement (26) de ladite pièce de raccordement (24).

6. Système d'ancrage selon l'une quelconque des revendications 1 à 5, **caractérisé en ce que** l'ensemble de fixation (28) comprend au moins un élément d'ajustement (32) conçu pour ajuster le positionnement mutuel entre ledit ensemble de fixation (28) et le profilé d'ancrage (10).
